# EUROPEAN PATENT APPLICATION

(11) **EP 4 725 742 A1**
(43) Date of publication of application: **15.04.2026**
(21) Application number: 24852048.8
(22) Date of filing: 25.06.2024
(51) Int. Cl.: B60L 3/00, B60L 15/38, H02M 1/32

(54) **DISCHARGE METHOD FOR LINK CAPACITOR AND VEHICLE SYSTEM PROVIDING SAME**

(30) Priority: 09.08.2023 KR 20230104174
(71) Applicant: LG Energy Solution, Ltd., Seoul 07335 (KR)
(72) Inventor: CHOI, Jang Hyeok, Daejeon 34122 (KR); OCK, Jangsoo, Daejeon 34122 (KR)
(74) Representative: Plasseraud IP
(86) International application number: PCT/KR2024/008797
(87) International publication number: WO 2025/033692

(57) **Abstract**

The present invention relates to a discharge method for a link capacitor and a vehicle system providing the same, and a vehicle system of the present invention includes a battery, a link capacitor that is connected in parallel with the battery, an auxiliary discharge circuit that includes an auxiliary discharge resistor and an auxiliary discharge switch which are connected in series between the positive electrode and negative electrode of the battery, and a battery management system (BMS) that performs turn-on control on the auxiliary discharge switch when the magnitude of a link voltage which is the voltage between both terminals of the link capacitor after the link capacitor is discharged by a main discharge circuit which is connected in parallel with the link capacitor is equal to or greater than a reference value.

## Description

### [Technical Field]

### Cross-Reference to Related Application(s)

This application claims priority to and the benefit of Korean Patent Application no. 10-2023-0104174, filed on August 9, 2023, with the Korean Intellectual Property Office, the entire contents of which are incorporated herein by reference.

The present invention relates to a discharge method for a link capacitor and a vehicle system providing the method.

### [Background Art]

In a vehicle which is driven by the power of a battery, such as electric vehicles (EVs), a battery system which connect a load device and the battery may include the battery, a contactor unit (or a relay unit), a current sensor, a battery management system (BMS) for controlling the battery and the contactor unit, a link capacitor (DC Link-Cap) X-cap for smoothing which is connected in parallel with the battery, etc.

The contactor unit may include a precharge contactor, a precharge resistor, and a main contactor. When the precharge contactor is turned on first, the link capacitor X-cap is charged while surge current is limited by the precharge resistor. Thereafter, when the main contactor is turned on and the precharge contactor is turned off, charging or discharging may be performed between the battery and an external device (such as the motor, the charger, or the like).

In the battery discharging process, charge is first accumulated in the link capacitor X-cap, whereby the power from the battery is smoothed, and the smoothed power is supplied to the external device (such as the motor). Therefore, the battery system may supply stable power to the load device. Further, in the battery charging process, the link capacitor X-cap may smooth the power from the external device (such as the charger), and the smoothed power may be supplied to the battery.

By the way, if the contactor fails, the electrical connection between the battery and the external device cannot be normally controlled. Examples of physical faults of the contactor include a stuck-close fault in which the contactor is welded in a closed state, a stuck-open fault in which the contactor is welded in an open state, etc.

With regard to contactor fault diagnosis, in the related art, a method of measuring the voltage between both terminals of the battery and the voltage between both terminals of the link capacitor X-cap when the contactor is on, calculating the difference value between the value of the voltage between both terminals of the battery and the value of the voltage between both terminals of the link capacitor, and comparing the calculated difference value with an error value has been used.

Not only in accurate contactor fault diagnosis but also in various situations such as a vehicle collision, charge remaining in the link capacitor (DC Link-Cap) should be discharged by a vehicle-side discharge circuit.

If the link capacitor (DC Link-Cap) is not sufficiently discharged, a misdiagnosis problem may occur in the contactor fault diagnosis, or various problems may occur in the vehicle maintenance process.

### [Disclosure]

### [Technical Problem]

The present invention attempts to provide a method of discharging a link capacitor capable of discharging the link capacitor even in an emergency situation such as when a vehicle-side discharge circuit malfunctions, and a battery system for providing a vehicle system to provide the method.

### [Technical Solution]

A vehicle system according to a feature of the present invention includes a battery, a link capacitor that is connected in parallel with the battery, an auxiliary discharge circuit that includes an auxiliary discharge resistor and an auxiliary discharge switch which are connected in series between a positive electrode and a negative electrode of the battery, and a battery management system (BMS) that is configured to perform turn-on control on the auxiliary discharge switch when a magnitude of a link voltage which is a voltage between both terminals of the link capacitor after the link capacitor is discharged by a main discharge circuit which is connected in parallel with the link capacitor is equal to or greater than a reference value.

The vehicle system may further include the main discharge circuit that includes a main discharge resistor and a main discharge switch which are connected in series between the positive electrode and the negative electrode of the battery.

The vehicle system may further include an upper-level controller that performs turn-on control on the main discharge switch when an urgent event occurs, and instructs the BMS to perform turn-on control on the auxiliary discharge switch, when the magnitude of the link voltage is equal to or greater than the reference value after the main discharge switch has been controlled.

The vehicle system may further include a main contactor that is connected between the positive electrode of the battery and one terminal of the link capacitor, and when the urgent event occurs, the BMS may perform turn-off control on the main contactor.

The vehicle system may further include a battery system that includes the battery, the main contactor, the auxiliary discharge circuit, and the BMS.

After the turn-on control is performed on the auxiliary discharge switch, when the magnitude of the link voltage is equal to or greater than the reference value, the BMS may generate a first fault notification message including fault state information of the main discharge circuit and a second fault notification message including fault state information of the auxiliary discharge circuit.

After the turn-on control is performed on the auxiliary discharge switch, when the magnitude of the link voltage is smaller than the reference value, the BMS may generate a first fault notification message including fault state information of the main discharge circuit.

After the turn-on control is performed on the auxiliary discharge switch, when the magnitude of the link voltage is smaller than the reference value, the BMS may diagnose a welding fault of the main contactor.

The BMS may diagnose the welding fault of the main contactor by calculating a difference value between a magnitude of a battery voltage which is a voltage between both terminals of the battery and the magnitude of the link voltage and comparing the difference value with a predetermined error value.

A discharge method for a link capacitor according to another feature of the present invention is a discharge method for a link capacitor which is connected in parallel with a battery in a vehicle system including a main discharge circuit that includes a main discharge resistor and a main discharge switch which are connected in series between a positive electrode and a negative electrode of the battery, and an auxiliary discharge circuit that includes an auxiliary discharge resistor and an auxiliary discharge switch which are connected in series between the positive electrode and the negative electrode of the battery, and includes a step in which a battery management system (BMS) performs turn-off control on a main contactor which is connected between the positive electrode of the battery and one terminal of the link capacitor in response to an instruction of an upper-level controller, when an urgent event occurs, a step in which the upper-level controller performs turn-on control on the main discharge switch, a step in which the upper-level controller determines whether the magnitude of the link voltage is smaller than a reference value after the main discharge switch is controlled, a step in which the BMS performs turn-on control on the auxiliary discharge switch, when it is determined that the magnitude of the link voltage is equal to or greater than the reference value, a step in which the BMS determines whether the magnitude of the link voltage is smaller than the reference value after the auxiliary discharge switch is controlled, and a step in which the BMS diagnoses a welding fault of the main contactor, when it is determined that the magnitude of the link voltage is smaller than the reference value.

The method of discharging the link capacitor may further include a step in which the BMS generates a first fault notification message including fault state information of the main discharge circuit and a second fault notification message including fault state information of the auxiliary discharge circuit, when it is determined that the magnitude of the link voltage is equal to or greater than the reference value, after the step of determining whether the magnitude of the link voltage is smaller than the reference value after the auxiliary discharge switch is controlled.

The method of discharging the link capacitor may further include a step in which the BMS generates a first fault notification message including fault state information of the main discharge circuit, when the magnitude of the link voltage is smaller than the reference value after the auxiliary discharge switch is controlled, before the step of diagnosing the welding fault of the main contactor.

In the step of diagnosing the welding fault of the main contactor, the BMS may diagnose the welding fault of the main contactor by calculating a difference value between a magnitude of a battery voltage which is a voltage between both terminals of the battery and the magnitude of the link voltage and comparing the difference value with a predetermined error value.

### [Advantageous Effects]

The present invention can sufficiently discharge a link capacitor (DC Link-Cap) X-cap by an auxiliary discharge circuit on the battery system side even when a main discharge circuit on the vehicle side cannot perform its function.

The present invention can accurately diagnose stuck-open faults of contactor, thereby reducing the cost of replacing normal contactors due to misdiagnoses and quickly detecting the cause of a defect when the defect occur in a battery system.

The present invention can sufficiently discharge a link capacitor (DC Link-Cap) X-cap in urgent situations such as a vehicle collision, thereby ensuring the safety of a worker maintaining the vehicle, and can provide the cause of the problem of the vehicle to the worker as soon as possible in the vehicle maintenance.

### [Description of the Drawings]

FIG. 1 is a block diagram illustrating a vehicle system according to an exemplary embodiment.
FIG. 2 is a circuit diagram illustrating FIG. 1 in detail.
FIG. 3 is a drawing illustrating functions of a main discharge circuit and an auxiliary discharge circuit according to the exemplary embodiment.
FIG. 4 is a flow chart illustrating a discharge method for a link capacitor according to an exemplary embodiment.

### [Mode for Invention]

Hereinafter, exemplary embodiments disclosed in this specification will be described in detail with reference to the accompanying drawings; however, the same or similar constituent components are denoted by the same or similar reference symbols, and a repeated description thereof will not be made. As used herein, the suffix 'module' and/or the suffix 'unit' for constituent elements are given and used interchangeably in consideration of only ease of preparing this specification, and the suffixes themselves do not have meanings or roles distinguishable from each other. Further, when describing exemplary embodiments disclosed in this specification, detailed descriptions of publicly known technologies will be omitted if it is determined that specific description thereof may obscure the gist of the exemplary embodiments disclosed in this specification. Furthermore, the accompanying drawings are provided for helping to easily understand exemplary embodiments disclosed in the present specification, and the technical spirit disclosed in the present specification is not limited by the accompanying drawings, and it will be appreciated that the present invention includes all of the modifications, equivalent matters, and substitutes included in the spirit and the technical scope of the present invention.

Terms including an ordinal number, such as first and second, are used for describing various constituent elements, but the constituent elements are not limited by the terms. The terms are used only to discriminate one constituent element from another constituent element.

When a constituent element is referred to as being "connected" or "coupled" to another constituent element, it will be appreciated that it may be directly connected or coupled to the other constituent element or intervening other constituent elements may be present. In contrast, when a constituent element is referred to as being "directly connected" or "directly coupled" to another constituent element, it will be appreciated that there are no intervening other constituent elements present.

In the present application, it will be appreciated that terms "including" and "having" are intended to designate the existence of characteristics, numbers, steps, operations, constituent elements, and components described in the specification or a combination thereof, and do not exclude a possibility of the existence or addition of one or more other characteristics, numbers, steps, operations, constituent elements, and components, or a combination thereof in advance.

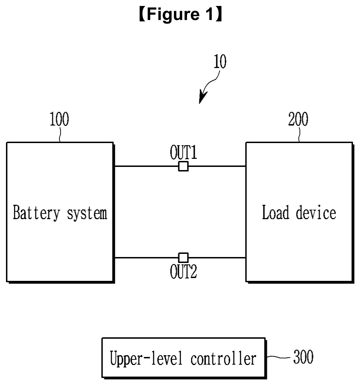

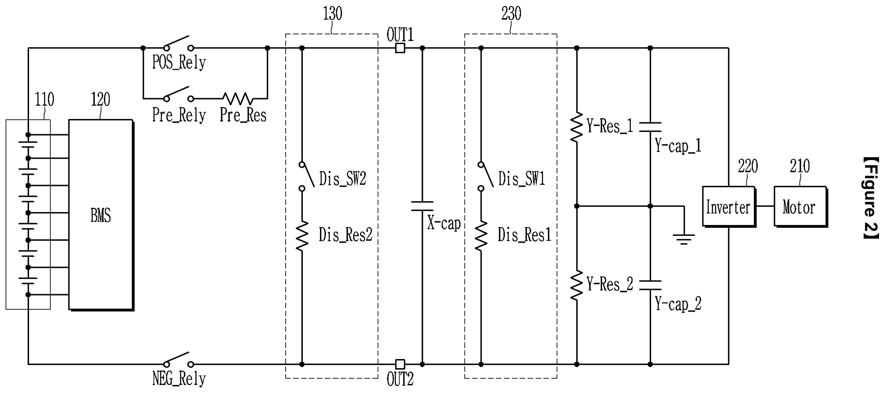

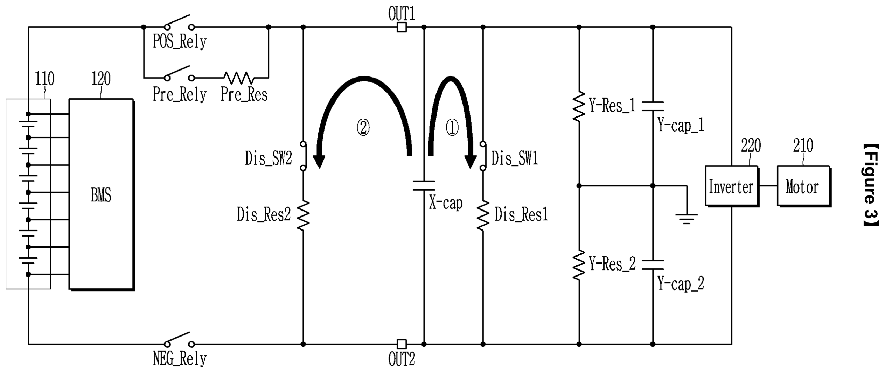

FIG. 1 is a block diagram illustrating a vehicle system according to an exemplary embodiment, FIG. 2 is a circuit diagram illustrating FIG. 1 in detail, and FIG. 3 is a drawing illustrating functions of a main discharge circuit and an auxiliary discharge circuit according to the exemplary embodiment.

Referring to FIG. 1, a vehicle system 10 includes a battery system 100, a load device 200, and an upper-level controller 300.

Referring to FIGS. 1 and 2, the battery system 100 includes a battery 110, battery management system (BMS) 120, an auxiliary discharge circuit 130, and a positive-electrode main contactor POS_Rely. In some exemplary embodiments, the battery system 100 may further include a negative-electrode main contactor NEG_Rely, a precharge contactor Pre _Rely, and a precharge resistor Pre_Res.

In FIGS. 1 to 3, the battery 110 is connected between two output terminals OUT1 and OUT2 of the battery system 100, and the positive-electrode main contactor POS_Rely is connected between the positive electrode of the battery 110 and the first output terminal OUT1, and the negative-electrode main contactor NEG_Rely is connected between the negative electrode of the battery 110 and the second output terminal OUT2. The components and the connection relationship among the components shown in FIG. 1 are an example, and the invention is not limited thereto.

The battery 110 may include a plurality of battery cells electrically connected in series and in parallel. In some exemplary embodiments, the battery cells may be rechargeable secondary batteries. For example, in a discharge mode, the battery 110 may supply power to the load device 200.

The BMS 120 may control the overall operation of the battery system 100. In some exemplary embodiments, when an urgent event occurs, the BMS 120 may control the auxiliary discharge circuit 130 to discharge a link capacitor (DC Link-Cap) X-cap.

The auxiliary discharge circuit 130 may include an auxiliary discharge resistor Dis_Res2 and an auxiliary discharge switch Dis_SW2.

Referring to FIG. 2, the auxiliary discharge resistor Dis_Res2 and the auxiliary discharge switch Dis_SW2 may be connected in series between the positive electrode and negative electrode of the battery 110. For example, the magnitude of the auxiliary discharge resistor Dis_Res2 may be variously set through experiments.

When the positive-electrode main contactor POS_Rely and the negative-electrode main contactor NEG_Rely are turned on, the battery system 100 and the load device 200 are electrically connected. Then, the power of the battery 110 is supplied to the load device 200, whereby the vehicle system 10 can perform predetermined operations. Hereinafter, the term "main contactors" may include the positive-electrode main contactor POS_Rely and the negative-electrode main contactor NEG_Rely.

The precharge resistor Pre_Res and the precharge contactor Pre _Rely may be connected in series between the positive electrode of the battery 110 and the first output terminal OUT1. The precharge resistor Pre_Res and the precharge contactor Pre _Rely may be connected between two terminals of the positive-electrode main contactor POS_Rely.

The precharge contactor Pre _Rely may reduce surge current which occurs when the positive-electrode main contactor POS_Rely is connected to the load device 200, thereby preventing damage to the positive-electrode main contactor POS_Rely and the battery 110.

The precharge contactor Pre _Rely may perform pre-charge. Specifically, when the precharge contactor Pre _Rely is turned on, the link capacitor X-cap may receive micro current reduced by the precharge resistor Pre_Res and slowly accumulate the charge. Thereafter, the positive-electrode main contactor POS_Rely may be turned on, and after a predetermined time elapses in a state where the precharge contactor Pre _Rely and the positive-electrode main contactor POS_Rely are on, the precharge contactor Pre _Rely may be turned off. Then, when the positive-electrode main contactor POS_Rely is connected to the load device 200, surge current may be reduced.

The positive-electrode main contactor POS_Rely may be connected between the positive electrode of the battery 110 and the load device 200. Referring to FIG. 1, the positive-electrode main contactor POS_Rely may be connected in parallel with the precharge resistor Pre_Res and the precharge contactor Pre _Rely. When the positive-electrode main contactor POS_Rely is turned on, the battery 110 and the load device 200 may be electrically connected, whereby charging or discharging of the battery 110 may be performed.

The load device 200 may be a device which receives power from the battery system 100 and drives the vehicle system 10.

Referring to FIG. 2, the load device 200 includes a motor 210, an inverter 220, and a main discharge circuit 230. In some exemplary embodiments, the load device 200 may further include a link capacitor X-cap, a plurality of Y-capacitors Y-cap_1 and Y-cap_2, and a plurality of load resistors Y-Res_1 and Y-Res_2. In FIGS. 2 and 3, it is shown that the link capacitor X-cap is included in the load device 200; however, the present invention is not limited thereto, and the link capacitor X-cap may be included in the battery system 100.

The motor 210 may be a device which converts electric energy into rotational kinetic energy. The inverter 220 may convert DC current, which is supplied from the battery 110, into AC current, and supply it to the motor 210. The motor 210, the inverter 220, and the like are well-known components, and thus will not be described in detail.

The main discharge circuit 230 may include a main discharge resistor Dis_Res1 and a main discharge switch Dis_SW1. Referring to FIG. 2, the main discharge resistor Dis_Res1 and the main discharge switch Dis_SW1 may be connected in series between both terminals of the inverter 220. The main discharge resistor Dis_Res1 and the main discharge switch Dis_SW1 may be connected in series between the first output terminal OUT1 and second output terminal OUT2 of the battery system 100.

In some exemplary embodiments, when an urgent event occurs during the operation of the vehicle system 10, the BMS 120 may perform turn-off control on the main contactors POS_Rely and NEG_Rely. For example, the urgent event may include an event such as a collision of the vehicle system 10 with an external vehicle system. In the urgent event situation, in order to prevent a secondary accident such as ignition of the battery 110, the upper-level controller 300 may inform the occurrence of the urgent event to the BMS 120, and the BMS 120 may perform turn-off control on the main contactors POS_Rely and NEG_Rely.

Subsequently, when an urgent event occurs, safety diagnosis on the whole vehicle system 10 and/or the whole battery system 100 may be required. To this end, it is impossible to preemptively discharge the link capacitor X-cap as soon as possible.

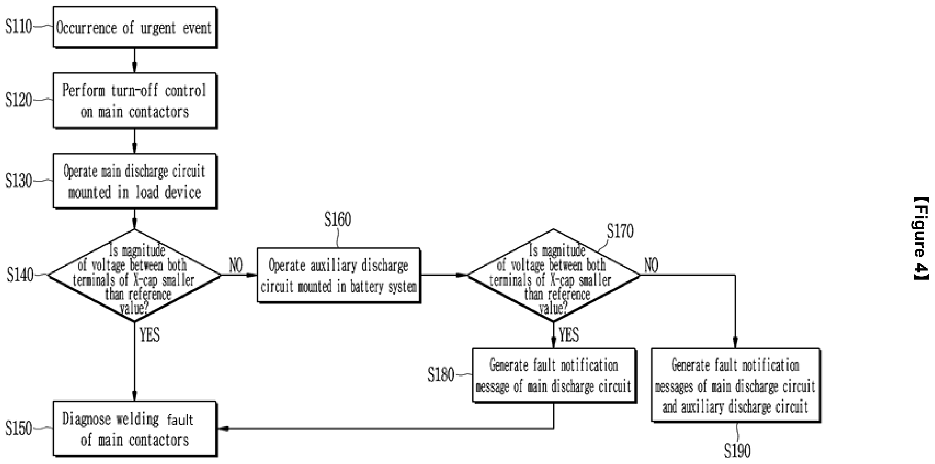

For example, when a physical fault such as a stuck-close fault in which the main contactor POS_Rely or NEG_Rely is welded in the closed state or a stuck-open fault in which the main contactor POS_Rely or NEG_Rely is welded in the open state occurs, the main contactor POS_Rely or NEG_Rely may not be turned off by control of the BMS 120. In some exemplary embodiments, when an urgent event occurs, safety diagnosis may be performed on whether the main contactors POS_Rely and NEG_Rely have been normally turned off. At this time, when fault diagnosis is performed on the main contactors POS_Rely and NEG_Rely in a state where all of the charge stored in the link capacitor X-cap has not been discharged, a misdiagnosis problem may occur. Hereinafter, a method of discharging the link capacitor (DC Link-Cap) X-cap when an urgent event occurs will be described in detail with reference to FIG. 4.

The link capacitor (DC Link-Cap) X-cap may be a smoothing capacitor (DC_Link Capacitor). For example, the link capacitor X-cap may serve as a buffer between the battery 110 and the inverter 220, thereby performing a function of preventing a large voltage difference between the battery 110 and the inverter 220.

The plurality of Y-capacitors Y-cap_1 and Y-cap_2 may include a first Y-capacitor Y-cap_1 and a second Y-capacitor Y-cap_2. The first Y-capacitor Y-cap_1 and the second Y-capacitor Y-cap_2 may be connected in series between the positive terminal and negative terminal of a load-side link. The node between the first Y-capacitor Y-cap_1 and the second Y-capacitor Y-cap_2 may be connected to a ground. A plurality of load resistors Y-Res_1 and Y-Res_2 may include a first load resistor Y-Res_1 and a second load resistor Y-Res_2. The first load resistor Y-Res_1 and the second load resistor Y-Res_2 may be connected in series between the positive terminal and negative terminal of the load-side link. The node between the first load resistor Y-Res_1 and the second load resistor Y-Res_2 may be connected to the ground. The plurality of Y-capacitors Y-cap_1 and Y-cap_2 and the plurality of load resistors Y-Res_1 and Y-Res_2 are components which are widely mounted in existing vehicle systems, and thus will not be described in detail.

The upper-level controller 300 may generally control the vehicle system 10. The upper-level controller 300 may monitor the state of the battery system 100 through communication with the BMS 120. The upper-level controller 300 may control the battery system 100 through the BMS 120.

In some exemplary embodiments, when an urgent event occurs, the upper-level controller 300 may turn off the main contactors POS_Rely and NEG_Rely through the BMS 120. Also, the upper-level controller 300 may directly turn on the main discharge switch Dis_SW1 of the main discharge circuit 230, thereby discharging the link capacitor X-cap. Further, the upper-level controller 300 may control the BMS 120 such that the auxiliary discharge switch Dis_SW2 of the auxiliary discharge circuit 130 is turned on.

Referring to FIG. 3, first, when the main discharge switch Dis_SW1 of the main discharge circuit 230 is turned on by the control of the upper-level controller 300, the charge stored in the link capacitor X-cap may be consumed through the main discharge resistor Dis_Res1 (the direction denoted by ①). If the link capacitor X-cap is not sufficiently discharged by the main discharge circuit 230, the auxiliary discharge switch Dis_SW2 of the auxiliary discharge circuit 130 may be turned on by the control of the BMS 120. Then, the charge stored in the link capacitor X-cap may be consumed through the auxiliary discharge resistor Dis_Res2 (the direction denoted by ②).

According to the exemplary embodiment, it is possible to sufficiently discharge the link capacitor X-cap to a desired target through the main discharge circuit 230 and the auxiliary discharge circuit 130, thereby preventing misdiagnosis problems when performing various safety diagnoses.

FIG. 4 is a flow chart illustrating a discharge method for a link capacitor according to an exemplary embodiment.

Referring to FIG. 4, when an urgent event occurs, the BMS 120 performs turn-off control on the main contactors POS_Rely and NEG_Rely (S110 and S120).

The urgent event may include occurrence of a situation which endangers the safety of the vehicle system 10 and is urgent, such as a collision of the vehicle system 10 with an external object, a fault of the vehicle system 10, etc. For example, the urgent event may include various events in which the main contactors POS_Rely and NEG_Rely should be turned off.

The upper-level controller 300 may determine occurrence of an urgent event corresponding to a preset situation, and inform the occurrence of the urgent event to the BMS 120 when the urgent event occurs. Then, the BMS 120 may perform turn-off control on the main contactors POS_Rely and NEG_Rely.

In a normal state, the main contactors POS_Rely and NEG_Rely may perform normal turn-off switching operations under the control of the BMS 120. However, in a state where a physical fault such as a stuck-close fault, a stuck-open fault, or the like occurs, even if the main contactors POS_Rely and NEG_Rely receive a turn-off control signal from the BMS 120, they may not be able to perform physical turn-off switching. In other words, a problem that the main contactors POS_Rely and NEG_Rely cannot be turned off even though they should be turned off when an urgent event occurs. For this reason, after the turn-off control signal is transmitted, a process of checking the states of the main contactors POS_Rely and NEG_Rely by diagnosing whether the main contactors POS_Rely and NEG_Rely have been actually turned off is necessary.

Subsequently, the upper-level controller 300 performs turn-on control on the main discharge switch Dis_SW1 of the main discharge circuit 230 mounted in the load device 200 (S130).

A welding fault of the main contactors POS_Rely and NEG_Rely may be diagnosed by calculating the difference value between the magnitude of the battery voltage which is the voltage between both terminals of the battery 110 and the magnitude of the link voltage which is the voltage between both terminals of the link capacitor X-cap, and comparing the difference value with a predetermined error value. Accordingly, when the link capacitor X-cap cannot be sufficiently discharged, the accuracy of the welding fault diagnosis on the main contactors POS_Rely and NEG_Rely may be low. In some exemplary embodiments, the upper-level controller 300 performs turn-on control on the main discharge switch Dis_SW1 of the main discharge circuit 230. Then, the charge stored in the link capacitor X-cap may be consumed through the main discharge resistor Dis_Res1.

Subsequently, the upper-level controller 300 determines whether the magnitude of the link voltage which is the voltage between both terminals of the link capacitor X-cap is smaller than a reference value (S140).

The upper-level controller 300 may receive the magnitude of the link voltage from a voltage device (not shown in the drawings) which measures the voltage between both terminals of the link capacitor X-cap.

For example, the reference value may correspond to a voltage value including a predetermined error value from the ground level. If the link capacitor X-cap is sufficiently discharged, the magnitude of the link voltage may correspond to the ground level. The case where the magnitude of the link voltage is equal to or greater than the reference value may refer to a state where the link capacitor X-cap has not been sufficiently discharged by the main discharge circuit 230. Accordingly, the case where the magnitude of the link voltage is equal to or greater than the reference value may refer to a fault state of the main discharge circuit 230.

Subsequently, when the magnitude of the link voltage is smaller than the reference value (YES in S140), the BMS 120 diagnoses a welding fault of the main contactors POS_Rely and NEG_Rely (S150).

For example, when the magnitude of the link voltage is smaller than the reference value, the upper-level controller 300 may instruct the BMS 120 to perform welding fault diagnosis on the main contactors POS_Rely and NEG_Rely.

The BMS 120 may receive the magnitude of the battery voltage from the voltage device (not shown in the drawings) which measures the voltage between both terminals of the battery 110. The BMS 120 may receive the magnitude of the link voltage from the voltage device (not shown in the drawings) which measures the voltage between both terminals of the link capacitor X-cap. For example, when the link capacitor X-cap is mounted in the battery system 100, the BMS 120 may receive the magnitude of the link voltage directly from the voltage device. For another example, when the link capacitor X-cap is mounted in the load device 200, the BMS 120 may receive the magnitude of the link voltage through the upper-level controller 300.

The BMS 120 calculates the difference value between the magnitude of the battery voltage and the magnitude of the link voltage. For example, when the difference value is equal to or greater than the predetermined error value, the BMS 120 may diagnose that the main contactors POS_Rely and NEG_Rely have been normally turned off in response to the turn-off control signal. For another example, when the difference value is smaller than the predetermined error value, the BMS 120 may diagnose a stuck-close fault state in which the main contactors POS_Rely and NEG_Rely have been welded in the closed state.

Subsequently, when the magnitude of the link voltage is equal to or greater than the reference value (NO in S140), the BMS 120 performs turn-on control on the auxiliary discharge switch Dis_SW2 of the auxiliary discharge circuit 130 mounted in the battery system 100 (S160).

For example, the upper-level controller 300 may instruct the BMS 120 to turn on the auxiliary discharge switch Dis_SW2 of the auxiliary discharge circuit 130. Then, the charge stored in the link capacitor X-cap may be consumed through the auxiliary discharge resistor Dis_Res2. In some exemplary embodiments, when the link capacitor X-cap is not sufficiently discharged by the main discharge circuit 230, the link capacitor X-cap may be further discharged by the auxiliary discharge circuit 130.

Subsequently, the BMS 120 determines whether the magnitude of the link voltage which is the voltage between both terminals of the link capacitor X-cap is smaller than the reference value (S170).

The BMS 120 may receive the magnitude of the link voltage from the voltage device (not shown in the drawings) which measures the voltage between both terminals of the link capacitor X-cap. For example, when the link capacitor X-cap is mounted in the battery system 100, the BMS 120 may receive the magnitude of the link voltage directly from the voltage device. For another example, when the link capacitor X-cap is mounted in the load device 200, the BMS 120 may receive the magnitude of the link voltage through the upper-level controller 300.

Subsequently, when the magnitude of the link voltage is smaller than the reference value (YES in S170), the BMS 120 generates a fault notification message of the main discharge circuit 230, and diagnoses a welding fault of the main contactors POS_Rely and NEG_Rely (S150 and S180).

STEP S180 of generating a first fault notification message including information on the fault state of the main discharge circuit 230 does not necessarily need to be performed after STEP S170. In other exemplary embodiments, STEP S180 may be performed after STEP S140. Further, the step of diagnosing a welding fault of the main contactors POS_Rely and NEG_Rely which is performed after STEP S180 may be identical to the step of diagnosing a welding fault of the main contactors POS_Rely and NEG_Rely which is performed after STEP S140. Accordingly, a description thereof will not be made.

For example, when the BMS 120 transmits the information representing that the magnitude of the link voltage is smaller than the reference value to the upper-level controller 300, the upper-level controller 300 may generate the first fault notification message and display it to the user.

For another example, when the BMS 120 generates the first fault notification message including information on the fault state of the main discharge circuit 230 and transmits it to the upper-level controller 300, the upper-level controller 300 may display the first fault notification message to the user.

Subsequently, when the magnitude of the link voltage is equal to or greater than the reference value (NO in S170), the BMS 120 may generate a first fault notification message including information on the fault state of the main discharge circuit 230 and a second fault notification message including information on the fault state of the auxiliary discharge circuit 130 (S190).

STEP S190 of generating the first fault notification message including the information on the fault state of the main discharge circuit 230 does not necessarily need to be performed after STEP S170. In other exemplary embodiments, the step of generating the first fault notification message in STEP S190 may be performed after STEP S140. In this case, in STEP S190, the BMS 120 may generate only the second fault notification message, and transmit the second fault notification message to the upper-level controller 300.

The upper-level controller 300 may display the first fault notification message and the second fault notification message to the user. Also, since the link capacitor X-cap has not been sufficiently discharged, the BMS 120 may not perform welding fault diagnosis on the main contactors POS_Rely and NEG_Rely.

While this invention has been described in connection with what is presently considered to be practical exemplary embodiments, it is to be understood that the invention is not limited to the disclosed embodiments. On the contrary, it is intended to cover various modifications and equivalent arrangements included within the spirit and scope of the appended claims.

## Claims

1. A vehicle system comprising:
a battery;
a link capacitor that is connected in parallel with the battery;
an auxiliary discharge circuit that includes an auxiliary discharge resistor and an auxiliary discharge switch which are connected in series between a positive electrode and a negative electrode of the battery; and
a battery management system BMS that is configured to perform turn-on control on the auxiliary discharge switch when a magnitude of a link voltage which is a voltage between both terminals of the link capacitor after the link capacitor is discharged by a main discharge circuit which is connected in parallel with the link capacitor is equal to or greater than a reference value.

2. The vehicle system of claim 1, further comprising:
the main discharge circuit that includes a main discharge resistor and a main discharge switch which are connected in series between the positive electrode and the negative electrode of the battery.

3. The vehicle system of claim 2, further comprising:
an upper-level controller that performs turn-on control on the main discharge switch when an urgent event occurs, and instructs the BMS to perform turn-on control on the auxiliary discharge switch, when the magnitude of the link voltage is equal to or greater than the reference value after the main discharge switch has been controlled.

4. The vehicle system of claim 3, further comprising:
a main contactor that is connected between the positive electrode of the battery and one terminal of the link capacitor,
wherein when the urgent event occurs, the BMS performs turn-off control on the main contactor.

5. The vehicle system of claim 4, further comprising:
a battery system that includes the battery, the main contactor, the auxiliary discharge circuit, and the BMS.

6. The vehicle system of claim 4, wherein:
after the turn-on control is performed on the auxiliary discharge switch, when the magnitude of the link voltage is equal to or greater than the reference value, the BMS generates a first fault notification message including fault state information of the main discharge circuit and a second fault notification message including fault state information of the auxiliary discharge circuit.

7. The vehicle system of claim 4, wherein:
after the turn-on control is performed on the auxiliary discharge switch, when the magnitude of the link voltage is smaller than the reference value, the BMS generates a first fault notification message including fault state information of the main discharge circuit.

8. The vehicle system of claim 4, wherein:
after the turn-on control is performed on the auxiliary discharge switch, when the magnitude of the link voltage is smaller than the reference value, the BMS diagnoses a welding fault of the main contactor.

9. The vehicle system of claim 8, wherein:
the BMS diagnoses the welding fault of the main contactor by calculating a difference value between a magnitude of a battery voltage which is a voltage between both terminals of the battery and the magnitude of the link voltage and comparing the difference value with a predetermined error value.

10. A discharge method for a link capacitor which is connected in parallel with a battery in a vehicle system including a main discharge circuit that includes a main discharge resistor and a main discharge switch which are connected in series between a positive electrode and a negative electrode of the battery, and an auxiliary discharge circuit that includes an auxiliary discharge resistor and an auxiliary discharge switch which are connected in series between the positive electrode and the negative electrode of the battery, the method comprising:
a step in which a battery management system BMS performs turn-off control on a main contactor which is connected between the positive electrode of the battery and one terminal of the link capacitor in response to an instruction of an upper-level controller, when an urgent event occurs;
a step in which the upper-level controller performs turn-on control on the main discharge switch;
a step in which the upper-level controller determines whether a magnitude of a link voltage is smaller than a reference value after the main discharge switch is controlled;
a step in which the BMS performs turn-on control on the auxiliary discharge switch, when it is determined that the magnitude of the link voltage is equal to or greater than the reference value;
a step in which the BMS determines whether the magnitude of the link voltage is smaller than the reference value after the auxiliary discharge switch is controlled; and
a step in which the BMS diagnoses a welding fault of the main contactor, when it is determined that the magnitude of the link voltage is smaller than the reference value.

11. The discharge method for the link capacitor according to claim 10, further comprising:
after the step of determining whether the magnitude of the link voltage is smaller than the reference value after the auxiliary discharge switch is controlled,
a step in which the BMS generates a first fault notification message including fault state information of the main discharge circuit and a second fault notification message including fault state information of the auxiliary discharge circuit, when it is determined that the magnitude of the link voltage is equal to or greater than the reference value.

12. The discharge method for the link capacitor according to claim 10, further comprising:
before the step of diagnosing the welding fault of the main contactor,
a step in which the BMS generates a first fault notification message including fault state information of the main discharge circuit, when the magnitude of the link voltage is smaller than the reference value after the auxiliary discharge switch is controlled.

13. The discharge method for the link capacitor according to claim 10, wherein:
the step of diagnosing the welding fault of the main contactor is **characterized in that** the BMS diagnoses the welding fault of the main contactor by calculating a difference value between a magnitude of a battery voltage which is a voltage between both terminals of the battery and the magnitude of the link voltage and comparing the difference value with a predetermined error value.
